# EUROPÄISCHE PATENTANMELDUNG

(11) **EP 1 349 057 A2**
(43) Veröffentlichungstag der Anmeldung: **01.10.2003**
(21) Anmeldenummer: 03003619.8
(22) Anmeldetag: 17.02.2003
(51) Int. Cl.: G06F 3/033

(54) **Verfahren zur optischen Hervorhebung von Informationen eines Bereichs der Benutzeroberfläche einer Computeranwenderstation**

(30) Priorität: 01.03.2002 DE 10209087
(71) Anmelder: SIEMENS AKTIENGESELLSCHAFT, 80333 München (DE)
(72) Erfinder: Denzlein, Michael, 91056 Erlangen (DE)

(57) **Zusammenfassung**

Die Erfindung betrifft ein Verfahren zur optischen Hervorhebung von Informationen mindestens eines Bereichs der Benutzeroberfläche einer Computer-Anwenderstation, insbesondere einer Computer-Anwenderstation zur Ansteuerung eines technischen Systems, wobei ein aktiver Bereich der Benutzeroberfläche identifiziert und der identifizierte Bereich auf der Benutzeroberfläche zur Verbesserung der Lesbarkeit vergrößert wird.

## Beschreibung

Verfahren zur optischen Hervorhebung von Informationen eines Bereichs der Benutzeroberfläche einer Computer-Anwenderstation

Die Erfindung betrifft ein Verfahren zur optischen Hervorhebung von Informationen mindestens eines Bereichs auf der Benutzeroberfläche einer Computer-Anwenderstation.

Aus der allgemeinen Lebenserfahrung ist es als Stand der Technik bekannt, dass auf einer Benutzeroberfläche einer Computer-Anwenderstation dargestellte Informationen oftmals verkleinert abgebildet sind und insbesondere von Benutzern mit einer Sehschwäche nur durch eine vom Benutzer vorgenommene lokale Vergrößerung lesbar dargestellt werden können. Ein derartiges Problem besteht bei hochauflösenden Darstellungen auf Benutzeroberflächen und bei kleineren Anzeigeflächen, z.B. von Handheld-Geräten.

Der Erfindung liegt die Aufgabe zugrunde, ein Verfahren zur optischen Hervorhebung von Informationen eines Bereichs auf der Benutzeroberfläche einer Computer-Anwenderstation anzubieten.

Die Aufgabe wird durch die Merkmale des Patentanspruchs 1 gelöst. Vorteilhafte Verfahrensvarianten werden in den Unteransprüchen 2 - 9 beschrieben.

Beim erfindungsgemäßen Verfahren wird zunächst ein aktiver Bereich der Benutzeroberfläche der Computer-Anwenderstation automatisch identifiziert. Ein derartig identifizierter Bereich wird dann zur Verbesserung der Lesbarkeit vergrößert dargestellt. Damit wird dem Benutzer die Aufgabe abgenommen, bestimmte Bereiche der Benutzeroberfläche, welche für ihn interessant sein könnten, anzusteuern und separat vergrößert darzustellen.

Beim erfindungsgemäßen Verfahren werden dem Benutzer interessierende und aktive Bereiche automatisch identifiziert und zeitsparend für den Benutzer vergrößert dargestellt. Somit kann die Bedienung der Computer-Anwenderstation durch den Benutzer beschleunigt werden. Ferner können auch hochauflösende Darstellungen auf Benutzeroberflächen oder kleinere Benutzeroberflächen (z.B. von Handheld-Geräten) verwendet werden. Durch das erfindungsgemäße Verfahren werden Bereiche der Benutzeroberfläche, die als aktiv identifiziert wurden, automatisch vergrößert dargestellt und sind somit für den Benutzer einsehbar.

Eine Identifizierung aktiver Bereiche der Benutzeroberfläche kann auf verschiedene Art und Weise geschehen. In einer ersten Ausführungsform kann ein Dialogfeld auf der Benutzeroberfläche zur Abfrage von bestimmten vom Benutzer einzugebenden Informationen und damit der Bereich (Teilfläche) der Benutzeroberfläche, in welcher das Dialogfenster aufgebaut wird, als aktiv identifiziert werden. In einem zweiten Schritt wird dieser Bereich, also das Dialogfeld, automatisch vergrößert dargestellt und kann damit besonders sicher vom Benutzer wahrgenommen werden.

Eine automatische Identifizierung aktiver Bereiche der Benutzeroberfläche kann bei Mitteilung bestimmter interner Zuständen und deren Visualisierung durch Informationsfelder auf der Benutzeroberfläche erfolgen. So kann die Mitteilung, dass z.B. nur noch ein bestimmter Speicherplatz zur Verfügung steht oder bei der Verarbeitung ein Verarbeitungsfehler aufgetreten ist, als Mitteilung eines internen Zustandes mit dem zugehörigen Informationsfeld automatisch als aktiver Bereich identifiziert und umgehend vergrößert dargestellt werden.

In einer weiteren Ausführungsform kann die Position eines Cursors, z.B. zur Darstellung der Position einer Maus oder eines Screw-Balls, automatisch als Hinweis auf einen identifizierten aktiven Bereich der Benutzeroberfläche dienen.

Die Zielposition des Cursors wird automatisch als aktiver und zu identifizierender Bereich eingestuft, so dass die Umgebung der Zielposition automatisch vergrößert wird. Dem liegt die Einschätzung zugrunde, dass die Aufmerksamkeit des Benutzers sich oftmals auf dem Bereich konzentriert, in dem sich der Cursor auf der Benutzeroberfläche befindet.

Nach einer weiteren besonders vorteilhaften Ausführungsform können Augenbewegungen des Benutzers durch an sich bekannte Eye-Tracking-Verfahren, also Verfahren zur Feststellung der Augenposition des Benutzers, festgestellt werden. Wenn nun der Benutzer seine Aufmerksamkeit auf einen bestimmten Teilbereich der Benutzeroberfläche konzentriert, kann dies durch das genannte Verfahren ermittelt und der dortige Bereich automatisch als aktiv identifiziert werden.

Der vergrößerte identifizierte Bereich kann mit einem fließenden Übergang (von Großdarstellung zu Kleindarstellung)zu nicht vergrößerten umgebenden Bereichen dargestellt werden. Dieser Übergang wird vom Benutzer als besonders angenehm und harmonisch empfunden, so dass die im vergrößerten Bereich angeordnete Information oftmals besonders vorteilhaft wahrgenommen wird.

Ein vereinfachter Programmieraufwand kann auch durch einen abrupten Übergang zwischen vergrößertem Bereich und nicht vergrößertem Bereichen in Umgebung des vergrößerten Bereichs erfolgen.

Dabei kann die Vergrößerung mit einem feststehenden Vergrößerungsfaktor dargestellt werden. Dieser kann vorgegeben und auch an Wünsche des Benutzers angepasst werden.

Insgesamt ermöglicht das erfindungsgemäße Verfahren die Hervorhebung von Informationen in als aktiv identifizierten Bereichen zusätzlichen neben bisherigen Hervorhebungsmitteln, wie z.B. Blinken oder Fettdarstellung. Damit wird eine fokusorientierte Lesehilfe auch bei feinst auflösenden Darstellungen auf Benutzeroberflächen oder für Benutzer ermöglicht.

Durch das erfindungsgemäße Verfahren zur optischen Hervorhebung von Informationen kann die gesamte Darstellung von Informationen auf der Benutzeroberfläche bewusst klein und mit höchster Auflösung dargestellt werden, wodurch sich die Packungsdichte der Darstellung erhöht und z.B. auch großformatige Darstellungen auf der Benutzeroberfläche visualisiert werden können. Gleichzeitig kann durch die beschriebene Vergrößerung aktiver Bereiche dennoch eine Lesbarkeit der Benutzeroberfläche erhalten werden.

Die Erfindung ist anhand eines Ausführungsbeispiels in den Zeichnungsfiguren näher dargestellt. Es zeigen:
- FIG 1: eine Benutzeroberfläche ohne vergrößerte Bereiche,
- FIG 2: eine Benutzeroberfläche mit einem vergrößerten aktiven Bereich.

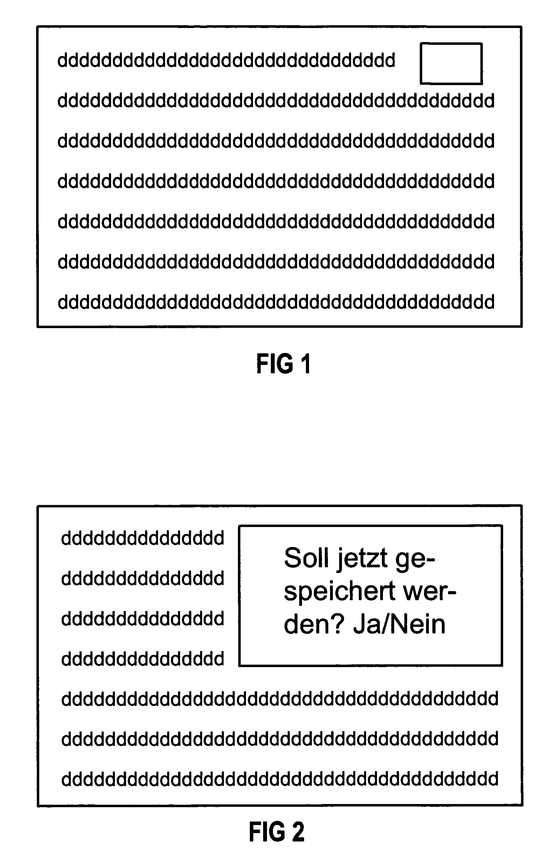

FIG 1 zeigt in schematischer Darstellung eine Benutzeroberfläche 1 (Bildschirm) einer an sich bekannten Computer-Anwenderstation (nicht näher abgebildet), z.B. eines Personal-Computers, oder eines sonstigen Gerätes mit Display-Element (z.B. eines Handheld-Gerätes) z.B. zur Ansteuerung eines technischen Systems (Produktionsanlage, Kraftwerk etc.). Dabei sind ein Dialogfeld 2 sowie allgemeine Textinformationen "ddd" auf dem Bildschirm angezeigt.

FIG 2 zeigt das Dialogfeld 2 vergrößert mit einer nun lesbaren Dialogabfrage "Soll jetzt gespeichert werden? Ja/Nein" .

Aufgrund seiner Eigenschaft als Dialogfeld 2 wurde dieses auf der Benutzeroberfläche 1 nach FIG 1 als aktiver Bereich automatisch identifiziert und auf der Benutzeroberfläche 1 nach FIG 2 vergrößert dargestellt.

Damit wird durch das Ereignis des Aufbaus eines Dialogfeldes 2 auf einer Benutzeroberfläche 1 dieser Bereich (Teilfläche) der Benutzeroberfläche 1 als aktiv identifiziert, automatisch vergrößert dargestellt und kann somit vom Benutzer leichter wahrgenommen werden.

In der Darstellung nach FIG 2 besteht ein abrupter Übergang zwischen dem vergrößerten Dialogfeld 2 und den nicht vergrößerten Textinformationen "ddd". Dieser Übergang kann auch fließend sein (nicht abgebildet).

## Patentansprüche

1. Verfahren zur optischen Hervorhebung von Informationen mindestens eines Bereichs auf der Benutzeroberfläche einer Computer-Anwenderstation, insbesondere einer Computer-Anwenderstation zur Ansteuerung eines technischen Systems, mit folgenden Verfahrensschritten:
- Identifizierung eines aktiven Bereichs der Benutzeroberfläche,
- Vergrößerung des identifizierten Bereichs auf der Benutzeroberfläche zur Verbesserung der Lesbarkeit.

2. Verfahren nach Anspruch 1, wobei ein Dialogfeld auf der Benutzeroberfläche als aktiver Bereich identifiziert wird.

3. Verfahren nach Anspruch 1 oder 2, wobei eine Mitteilung interner Zustände der Computer-Anwenderstation auf der Benutzeroberfläche als aktiver Bereich identifiziert wird.

4. Verfahren nach einem der vorhergehenden Ansprüche, wobei eine Position eines Cursors, z.B. zur Anzeige der Position einer Mausbedienung oder eines Screw-Balls, als aktiver Bereich identifiziert wird.

5. Verfahren nach einem der vorhergehenden Ansprüche, wobei die Augenposition des Benutzers im Zusammenhang mit der Benutzeroberfläche als aktiver Bereich der Benutzeroberfläche identifiziert wird.

6. Verfahren nach einem der vorhergehenden Ansprüche, wobei der vergrößerte identifizierte Bereich einen fließenden Übergang zu nicht vergrößerten nicht identifizierten Bereichen aufweist.

7. Verfahren nach einem der vorhergehenden Ansprüche, wobei der vergrößerte identifizierte Bereich einen abrupten Übergang zu nicht vergrößerten nicht identifizierten Bereichen aufweist.

8. Verfahren nach einem vorhergehenden Ansprüche, wobei der identifizierte Bereich mit einem vorgewählten Vergrößerungsfaktor vergrößert gegenüber nicht identifizierten Bereichen der Benutzeroberfläche dargestellt ist.

9. Verfahren nach einem der vorhergehenden Ansprüche, wobei der Vergrößerungsfaktor einstellbar ist.
